# EUROPÄISCHE PATENTSCHRIFT

(11) **EP 4 116 106 B1**
(45) Veröffentlichungstag und Bekanntmachung des Hinweises auf die Patenterteilung: **05.03.2025**
(21) Anmeldenummer: 22179288.0
(22) Anmeldetag: 15.06.2022
(51) Int. Cl.: B42D 25/373, B42D 25/355, G06K 7/00, G06K 19/06, G06K 7/08, G06K 19/14, G06K 19/18, G06K 19/12

(54) **SICHERHEITSDOKUMENT UND VERFAHREN ZUR HERSTELLUNG EINES SICHERHEITSDOKUMENTS**
SECURITY DOCUMENT AND METHOD FOR PRODUCING A SECURITY DOCUMENT
DOCUMENT DE SÉCURITÉ ET PROCÉDÉ DE PRODUCTION D'UN DOCUMENT DE SÉCURITÉ

(30) Priorität: 06.07.2021 DE 102021003493
(43) Veröffentlichungstag der Anmeldung: 11.01.2023
(73) Patentinhaber: Giesecke+Devrient Currency Technology GmbH, 81677 München (DE)
(72) Erfinder: Mayer, Karlheinz, 88167 Grünenbach (DE); Scherer, Maik Rudolf Johann, 82491 Grainau (DE); Hunger, Christoph, 83734 Hausham (DE)
(74) Vertreter: Giesecke+Devrient IP

(56) Entgegenhaltungen:
- EP-A1- 3 355 234
- EP-A1- 3 355 235
- EP-A1- 3 355 246
- EP-A1- 3 468 040
- WO-A1-2017/130005
- WO-A1-2020/058231
- DE-A1- 102010 028 926

## Beschreibung

Die Erfindung betrifft ein Sicherheitsdokument und ein Verfahren zur Herstellung eines Sicherheitsdokuments.

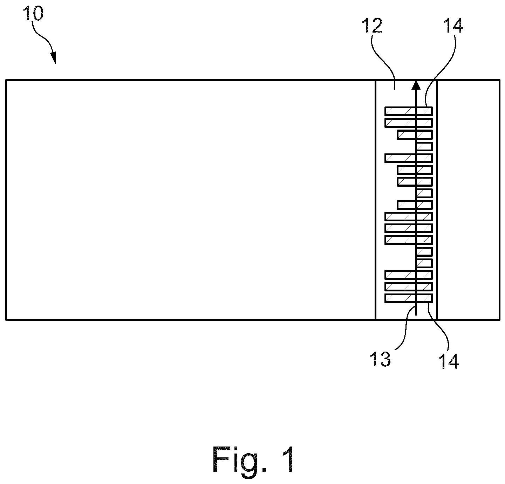

Es ist bekannt, ein Sicherheitsdokument, wie z.B. eine Banknote mit dem Mobiltelefon oder einem Tablet zu identifizieren. Dabei legt ein Benutzer die Banknote 10 mit ihrem Sicherheitsfaden oder Sicherheitsstreifen (LEAD) 12 auf das kapazitive Touch-Display (kapazitive berührungsempfindliche Anzeigefläche) des Mobiltelefons oder Tablets und fährt mit dem Finger als Eingabemittel über den Sicherheitsfaden oder den Sicherheitsstreifen 12, wie in Fig. 1 schematisch dargestellt ist. Auf diese Weise wird eine Relativbewegung zum Sicherheitsdokument 10 ausgeführt, die in Fig. 1 mit dem Pfeil 13 veranschaulicht ist. Der Sicherheitsstreifen 12 oder der Sicherheitsfaden enthält leitfähige Strukturen 14 mit einer Codierung oder die leitfähigen Strukturen 14 mit Codierung sind unter dem Sicherheitsstreifen oder dem Sicherheitsfaden angeordnet. Die Relativbewegung über den Sicherheitsfaden oder den Sicherheitsstreifen 12 führt zu einer dynamischen Änderung des Signals in einzelnen Sensorflächen des Touch-Displays, die je nach kapazitiven und/ oder magnetischen Eigenschaften bzw. der Leitfähigkeiten des Sicherheitsfadens oder Sicherheitsstreifens dessen eindeutige Identifikation ermöglicht. Um das Display des Mobiltelefons oder des Tablets berührungssensitiv, d.h. berührungsempfindlich, zu gestalten, kann dieses beispielsweise mit der Poly-Touch-Technologie der Firma Glyn ausgestattet sein. Dabei bildet ein Raster aus diamantenförmigen ITO(Indiumzinnoxid)-Sensorfeldern ein Netz von Kondensatoren. Der im Display integrierte Controller scannt in hoher Geschwindigkeit jeden einzelnen Kondensator ab und registriert dabei jegliche kapazitive Veränderung. Die Größe solcher Sensorfelder liegt typischerweise bei 4x4 mm und geht mittlerweile in Richtung 2x2 mm.

EP3468040 A1 beschreibt ein leitendes Element, das als Verbindung zu einem kapazitiven Erfassungselement dienen kann, mit einem Satz länglicher leitender Bahnen und einen Satz leitender Elemente, die die Bahnen kreuzen. WO2020/058233A1 betrifft eine Vorrichtung, umfassend eine elektrisch leitende Struktur auf einem nichtleitenden Substrat zur Erzeugung eines zeitabhängigen Signals an einem kapazitiven Flächensensor. WO2020/058231 A1 offenbart eine Vorrichtung zur Erzeugung eines periodischen Signals auf einem kapazitiven Flächensensor, auf deren Kontaktseite eine elektrisch leitfähige Struktur angeordnet ist. Aus EP2580714 ist ein System bekannt, das einen kapazitiven Informationsträger, in dem eine elektrisch leitende Schicht auf einem elektrisch nicht leitenden Substrat angeordnet ist, und einen Oberflächensensor umfasst. Die EP3355234 A1 und die EP3355235 A9 betreffen jeweils Vorrichtungen und ihre Verwendung zur Erzeugung eines zeitabhängigen Signals auf einem kapazitiven Flächensensor, sowie elektrisch leitfähige Strukturen für solche Vorrichtungen. US2020/0117972 A1 beschreibt ein Verfahren zum Erzeugen eines zeitabhängigen Signals auf einem kapazitiven Oberflächensensor, und ein Verfahren zum Identifizieren eines kartenartigen Objekts, das bevorzugt mindestens zwei galvanisch getrennte Codierungselemente enthält. Aus der WO2018/141479 A1 ist eine Vorrichtung und deren Verwendung zum Erzeugen eines zeitabhängigen Signals auf einem kapazitiven Oberflächensensor und eine elektrisch leitende Struktur für eine solche Vorrichtung bekannt. In der WO2016/131963 A1 ist ein selbsterdender kapazitiver Informationsträger beschrieben, in dem Information durch ein Informationsmuster codiert ist, wobei die Information erkennbar ist durch einen kapazitiven Touchscreen (kapazitiven berührungsempfindlichen Bildschirm) mit Schnittpunkten aus Antriebselektroden und Erfassungselektroden.

Aufgrund von Schwankungen in der Detektion, sowie in der Herstellung der Sicherheitselemente und des Substrates eines Sicherheitsdokuments kann es schwierig werden, eine eindeutige und sichere Unterscheidung verschiedener Sicherheitselemente, z.B. in verschiedenen Währungen und Denominationen, unter verschiedenen Umgebungsbedingungen zu ermöglichen. Zudem sind die Variationsmöglichkeiten des erhaltenen Signals eng begrenzt. WO 2018/141479 A1 beschreibt eine Datenkapazität einer Codierung. Bei bekannten Sicherheitselementen mit Codierung ist davon auszugehen, dass die Datenkapazität die mögliche Anzahl unterschiedliche Codierungen beschränkt, i.d.R. auf 3 bis 10 bit.

Aufgabe der Erfindung ist es, ein Sicherheitsdokument bereitzustellen, das eine hohe Detektionssicherheit, eine gute Unterscheidbarkeit zu anderen Sicherheitsdokumenten und eine hohe Fälschungssicherheit ermöglicht.

Die Erfindung ist in den unabhängigen Ansprüchen definiert. Die abhängigen Ansprüche betreffen bevorzugte Weiterbildungen.

Die Erfindung betrifft ein Sicherheitsdokument, mit einem flächigen Substrat mit einer Vorderseite und einer Rückseite, das zumindest teilweise mit einer Deckschicht versehen ist, wobei zwischen dem Substrat und der Deckschicht mindestens eine flächig verteilte, leitfähige Identifizierungsstruktur vorgesehen ist, die mittels eines kapazitiven Flächensensors auslesbar ist. Die mindestens eine Identifizierungsstruktur ist bevorzugt ihrerseits ebenfalls als Kondensator ausgebildet und weist mehrere kapazitive Kopplungsflächen und mehrere Kondensatorflächen auf, und die kapazitiven Kopplungsflächen sind galvanisch getrennt voneinander jeweils mit einer oder mehreren Kondensatorflächen leitend verbunden, wobei die mindestens eine Identifizierungsstruktur als eine flächig strukturierte Schicht ausgebildet ist, die mindestens ein Element aufweist, ausgewählt aus einer im sichtbaren und/oder IR-Wellenlängenbereich zumindest teilweise transparenten leitfähigen Farbe und einer im sichtbaren und/ oder IR-Wellenlängenbereich zumindest teilweise transparenten, leitfähigen Metallstruktur; und/oder wobei die mindestens eine Identifizierungsstruktur als eine flächig strukturierte Schicht ausgebildet ist, die eine im sichtbaren und/oder IR-Wellenlängenbereich zumindest teilweise intransparente leitfähige Farbe aufweist, und wobei auf der Außenseite der Deckschicht eine opake Farbannahmeschicht aufgebracht ist.

Die Erfindung ermöglicht, die mindestens eine Identifizierungsstruktur im Wesentlichen unsichtbar auszubilden. Dies fördert eine möglichst unsichtbare Anordnung der leitfähigen Strukturen, so dass eine Nachahmung oder Fälschung des Sicherheitsdokuments vermieden werden kann.

Die Erfindung ermöglicht ferner, eine große Detektionsfläche, eine große Datenkapazität und viele Variationsmöglichkeiten der Identifizierungsstruktur bereitzustellen. Die mindestens eine leitfähige Identifizierungsstruktur kann zumindest teilweise über das Substrat flächig verteilt sein. Durch die flächige Verteilung der Kondensatorflächen der Identifizierungsstruktur werden die Detektionssicherheit und die Unterscheidbarkeit des Sicherheitsdokuments bei Einsatz des kapazitiven Flächensensors optimiert. Dies ist insbesondere bei der kapazitiven Identifikation von Banknoten vorteilhaft. Es wird ferner die Fälschungssicherheit und Manipulationssicherheit des Sicherheitsdokuments gefördert, da die optimierte Identifizierungsstruktur im kapazitiven Flächensensor ein spezifisches Signal erzeugt. Die mindestens eine Identifizierungsstruktur kann z.B. zur Erzeugung eines zeitabhängigen Signals ausgebildet sein. Die mindestens eine leitfähige Identifizierungsstruktur kann zudem als ein Muster gebildet sein.

Das Substrat kann ferner mehrlagig ausgebildet sein. Das Substrat und/oder die Deckschicht können nicht leitfähig sein. Die kapazitiven Kopplungsflächen können über Leitungsbahnen der mindestens einen Identifizierungsstruktur mit deren Kondensatorflächen verbunden sein. Ist eine der kapazitiven Kopplungsflächen mit mehreren der Kondensatorflächen leitend verbunden, können die Kondensatorflächen seriell über Leitungsbahnen verbunden vorgesehen sein. Es ist aber auch eine separate Leitung je Kondensatorfläche, d.h. eine Parallelschaltung denkbar und dann auch unterscheidbar.

Ist die leitfähige Schicht unter mind. einer abdeckenden Schicht angeordnet, z.B. einer Druckannahmeschicht und/oder einer Druckschicht ist die leitfähige Schicht darunter im sichtbaren Wellenlängenbereich nicht mehr erkennbar. Sie kann dann in diesem Wellenlängenbereich intransparent sein. Auch bei einem Aufbau von z.B. Papier-Folie-Papier benötigt man die Transparenz im sichtbaren Wellenlängenbereich nicht. Dann kann eine Transparenz im IR besondere vorteilhaft sein, weil eine Auswertung im Durchlicht mit BPS-Sensoren im IR dann besonders einfach ist, insbesondere ohne Störungen wird. Falls sich UV- oder IR-Merkmale unterhalb der leitfähigen Schicht befinden, sollte diese möglichst auch in diesem Wellenlängenbereich transparent sein. Gibt es hingegen Bereiche mit durchsichtiger Farbannahme-schicht, z.B. Fensterbereiche, wäre eine Absorption im Sichtbaren oder im IR mitunter nachteilig.

Die transparente, leitfähige Farbe kann mindestens ein Element aufweisen, ausgewählt aus Fluor dotiertem Zinnoxid (FTO), Aluminium dotiertem Zinkoxid (AZO), Indiumzinnoxid (ITO), Zinkoxid (ZnO), Isolator-Metall-Isolator-Farbe (IMI), Silber-Nanodrähte, Kohlenstoffnanoröhren (CNT), Graphen und leitfähige Polymere. Als Isolator-Metall-Isolator-Farbe kann eine Dielektrikum-Metall-Dielektrikum-Farbe eingesetzt werden. Als leitfähiges Polymer kann z.B. PEDOT:PSS Poly(3,4-ethylendioxythiophen)-poly(styrolsulfonat) genutzt werden.

Ferner kann, insbesondere zum Ausbilden der Kondensatorfläche(n), die Metallstruktur als "Smartmesh" ausgebildet sein. Ein derartiges Smartmesh ist beispielsweise aus WO 2016/192858 A1 oder DE 10 2020 005 643 A1 bekannt. Hierzu wird zuerst Riss-bildende Beschichtung auf das Trägersubstrat aufgebracht, die Beschichtung in einem Trocknungsprozess zahlreiche Risse in Form eines dichtmaschigen, zusammenhängenden Netzes ausbildet. Diese getrocknete Beschichtung wird auch als Risstemplat bezeichnet. Anschließend wird auf das Risstemplat eine Metallisierung aufgebracht. Das Entfernen des Risstemplats lässt die Metallisierung in den Rissen stehen und erzeugt soeine optisch transparente (insbesondere für das unbewaffnete Auge), leitfähige Metallisierung in Form eines dichtmaschigen, zusammenhängenden Netzes - das Smartmesh. Dies ist besonders vorteilhaft, wenn ein Sicherheitsstreifen oder ein Sicherheitsfaden als innenliegende Sicherheitselement unter Schutzfolien eines Hybrid-Sicherheitsdokuments einlaminiert sind. Durch Verwenden des Smartmeshs wird eine im Wesentlichen unsichtbare, d.h. transparente, leitfähige Identifizierungsstruktur bereitgestellt. Daher kann eine Farbannahmeschicht auf der Außenseite der Deckschicht im Bereich des innenliegenden Sicherheitselements ausgespart werden, weil dessen Optik durch das Smartmesh nicht gestört wird.

In Ausführungsformen des Sicherheitsdokuments kann die mindestens eine Identifizierungsstruktur voneinander galvanisch getrennte leitfähige Codierungsstrukturen aufweisen und die kapazitiven Kopplungsflächen können jeweils mit einer der leitfähigen Codierungsstrukturen leitend verbunden und/oder in Kontakt dazu angeordnet sein.

Zur Ausbildung der kapazitiv wirkenden Identifizierungsstruktur kann zuerst eine flächige Metallstruktur ausgebildet werden, z.B. als Smartmesh, und anschließend in Bereiche von 1 mm² Fläche oder kleiner unterteilt werden. Diese wirken dann elektrisch nicht mehr für die Identifizierung, was letztlich die gewünschte Strukturierung bewirkt. Zerteilt man die flächige Metallstruktur in Flächenabschnitte von nicht über 1 mm², erleichtert dies es, die Zuleitungen zu den Bereichen so ausgebildet, dass diese keinen Einfluss auf das Signal nehmen. Die Identifizierungsstruktur umfasst also bevorzugt eine flächig erstreckte Metallisierung (z.B. ein Smartmesh), die in Teilabschnitten in eine Vielzahl von Bereichen mit 1 mm² Fläche oder kleiner unterteilt sind.

Die kapazitiven Kopplungsflächen können in einer Reihe angeordnet sein. Die Kondensatorflächen und/oder die leitfähigen Codierungsstrukturen können mindestens eine Identifizierungscodierung aufweisen oder als mindestens eine Identifizierungscodierung ausgebildet sein. Das Sicherheitsdokument kann ferner einen Sicherheitsstreifen, einen Sicherheitsfaden und/oder eine Guilloche aufweisen, unter denen die leitfähigen Codierungsstrukturen und/ oder die kapazitiven Kopplungsflächen vorgesehen sind.

Das Substrat kann ein Papier und/ oder eine Baumwolle enthalten oder daraus gebildet sein und die Deckschicht kann mindestens ein Polymer enthalten oder daraus gebildet sein. Das Substrat kann mindestens ein Polymer enthalten oder daraus gebildet sein und die Deckschicht kann ein Papier und/oder eine Baumwolle enthalten oder daraus gebildet sein. Das Substrat und die Deckschicht können mindestens ein Polymer oder unterschiedliche Polymere enthalten oder daraus gebildet sein. Ferner kann die Deckschicht auf Vorderseite und der Rückseite des Substrats gleiche oder unterschiedliches Materialien enthalten.

Die mindestens eine Identifizierungsstruktur kann zwischen dem Substrat und der Deckschicht auf der Vorderseite des Substrats und/oder zwischen dem Substrat und der Deckschicht auf der Rückseite des Substrats vorgesehen sein. Die mindestens eine Identifizierungsstruktur kann auf der Innenseite der Deckschicht, auf der Vorderseite des Substrats und/oder auf der Rückseite des Substrats aufgebracht sein.

Mindestens eine der Identifizierungsstrukturen kann zwischen dem Substrat und der Deckschicht auf der Vorderseite des Substrats vorgesehen sein und mindestens eine der Identifizierungsstrukturen kann zwischen dem Substrat und der Deckschicht auf der Rückseite des Substrats vorgesehen sein. Das Substrat kann eine Öffnung aufweisen, in der mindestens eine Identifizierungsstruktur der Vorderseite des Substrats und mindestens eine Identifizierungsstruktur der Rückseite des Substrats über einen galvanischen Kontakt miteinander verbunden sind. Die Öffnung kann als ein Fenster ausgebildet sein, z.B. im Falle einer Banknote als ein Banknotenfenster.

Die mindestens eine Identifizierungsstruktur kann selbsterdend ausgebildet sein und zum Auslesen und Erden durch Auflegen des Sicherheitsdokuments auf den kapazitiven Flächensensor ausgebildet sein. Die mindestens eine Identifizierungsstruktur kann ferner zum Auslesen und Erden durch Auflegen des Sicherheitsdokuments auf den kapazitiven Flächensensor, der berührungssensitiv ist, und durch eine Bewegung eines Eingabemittels in Kontakt mit dem und über das Sicherheitsdokument im Bereich der kapazitiven Kopplungsflächen ausgebildet sein. Das Eingabemittel kann z.B. der Finger eines Benutzers oder ein vom Benutzer geführter Stift sein, wobei der Benutzer das Sicherheitsdokument auf den kapazitiven Touchscreen (kapazitiven berührungsempfindlichen Bildschirm) eines Mobiltelefons oder Tablets auflegt und durch eine dynamische Bewegung des Fingers oder des Stifts auf dem Sicherheitsdokument das Auslesen des Sicherheitsdokuments bewirkt. Die mindestens eine Identifizierungsstruktur kann eine Datenkapazität von mindestens 10 bit, bevorzugt mindestens 50 bit, mehr bevorzugt mindestens 100 bit besitzen. Bevorzugt ist weiter ein Bereich zwischen 10 und 100 bit, da damit ein guter Ausgleich zwischen verfügbarer Fläche und nötiger Fehlerkorrektur erreicht ist. Die mindestens eine Identifizierungsstruktur kann des Weiteren über mindestens 30%, bevorzugt mindestens 50%, mehr bevorzugt mindestens 80% der flächigen Erstreckung des Substrats verteilt sein. Die mindestens eine Identifizierungsstruktur kann sich z.B. über mehr als die Flächenerstreckung eines Sicherheitsstreifens des Sicherheitsdokuments erstrecken. Das Sicherheitsdokument kann eine Banknote, ein Scheck, ein Wertpapier, ein Ausweis, ein Pass, eine Eintrittskarte, eine Fahrkarte, eine Flugkarte, ein Etikett, eine Briefmarke, eine Zahlungsverkehr-Karte, eine Urkunde, ein Vertrag oder ein Zeugnis sein. Die Identifizierungsstruktur ermöglicht eine digitale Signatur des Sicherheitsdokuments kapazitiv auszulesen.

Die Erfindung betrifft ebenfalls ein Verfahren zum Herstellen eines Sicherheitsdokuments nach einer der vorstehenden Ausführungsformen, mit Bereitstellen eines flächigen Substrats mit einer Vorderseite und einer Rückseite, und Aufbringen einer Deckschicht zumindest teilweise auf das Substrat, wobei zwischen dem Substrat und der Deckschicht mindestens eine flächig verteilte, leitfähige Identifizierungsstruktur vorgesehen wird, die mittels eines kapazitiven Flächensensors auslesbar ist. Dabei werden in der mindestens einen Identifizierungsstruktur mehrere kapazitive Kopplungsflächen und mehrere Kondensatorflächen vorgesehen, und die kapazitiven Kopplungsflächen werden galvanisch getrennt voneinander jeweils mit einer oder mehreren Kondensatorflächen leitend verbunden, wobei die mindestens eine Identifizierungsstruktur als eine flächig strukturierte Schicht ausgebildet ist, die mindestens ein Element aufweist, ausgewählt aus einer im sichtbaren und/oder IR-Wellenlängenbereich zumindest teilweise transparenten leitfähigen Farbe und einer im sichtbaren und/ oder IR-Wellenlängenbereich zumindest teilweise transparenten, leitfähigen Metallstruktur; und/oder wobei die mindestens eine Identifizierungsstruktur als eine flächig strukturierte Schicht ausgebildet ist, die eine im sichtbaren und/oder IR-Wellenlängenbereich zumindest teilweise intransparente leitfähige Farbe aufweist, und wobei auf der Außenseite der Deckschicht eine opake Farbannahmeschicht aufgebracht wird.

Die mindestens eine Identifizierungsstruktur kann auf eine Innenseite der Deckschicht aufgebracht werden und die Deckschicht kann mit ihrer Innenseite auf die Vorderseite und/oder die Rückseite des Substrats aufgebracht werden. Dabei kann die Deckschicht mindestens ein Polymer enthalten oder daraus gebildet sein. Die mindestens eine Identifizierungsstruktur kann auf die Vorderseite und/oder die Rückseite des Substrats aufgebracht werden und die Deckschicht kann auf die mit der mindestens einen Identifizierungsstruktur versehenen Seite des Substrats aufgebracht werden. Dabei kann das Substrat mindestens ein Polymer enthalten oder daraus gebildet sein.

Die leitfähige Farbe kann z.B. durch ein Druckverfahren aufgebracht werden. Die leitfähige Farbe kann mindestens ein Element aufweisen, ausgewählt aus Fluor dotiertem Zinnoxid (FTO), Aluminium dotiertem Zinkoxid (AZO), Indiumzinnoxid (ITO), Zinkoxid (ZnO), Isolator-Metall-Isolator-Farbe (IMI), Silber-Nanodrähte, Kohlenstoffnanoröhren (CNT), Graphen und leitfähige Polymere.

Zur Ausbildung der kapazitiv wirkenden Identifizierungsstruktur kann zuerst eine flächige Metallstruktur ausgebildet werden, z.B. als Smartmesh, und anschließende in Bereiche von 1 mm² Fläche oder kleiner unterteilt werden. Diese wirken dann elektrisch nicht mehr für die Identifizierung, was letztlich die gewünschte Strukturierung bewirkt. Zerteilt man die flächige Metallstruktur (z.B. mittels Laserbehandlung) in Flächenabschnitte von nicht über 1 mm², erleichtert dies es, die Zuleitungen zu den Bereichen so ausgebildet, dass diese keinen Einfluss auf das Signal nehmen. Natürlich ist eine herkömmliche Strukturierung durch Demetalliserung ebenfalls möglich. Dies gilt insbesonder für das genannte Smartmesh. Es erreicht zuerst eine vollflächige Leitfähigkeit. Damit die gewünschten Kondensatorflächen richtig wirken, wird die flächige Erstreckung der Leitfähigkeit in den nicht benötigten Bereichen zertört. Vorzugsweise durch eine Waschfarbenstruktur, in Teilflächen <1mm² zerteilen oder vollständig abwaschen.

Die Metallstruktur kann, wie bereits erwähnt, als Smartmesh ausgebildet werden durch Aufbringen eines Risstemplats auf die Deckschicht oder das Substrat, Aufbringen einer Metallschicht auf das Risstemplat, Entfernen (z.B. Auswaschen) des Risstemplats und Strukturieren der Metallschicht mittels Laserbehandlung. Die Metallstruktur kann ferner ausgebildet werden durch Aufbringen einer auswaschbaren Farbschicht auf die Deckschicht oder das Substrat, Aufbringen eines Risstemplats auf der Farbschicht, Aufbringen einer Metallschicht auf das Risstemplat, und Auswaschen der Farbschicht und des Risstemplats mittels eines Waschverfahrens, das beispielsweise aus WO 99/13157 A1 bekannt ist. Wird das Risstemplat oder die auswaschbare Farbschicht auf die Deckschicht aufgebracht, kann die Metallstruktur während der Produktion der Deckschicht aufgebracht werden. Das Aufbringen der Metallschicht kann z.B. durch Bedampfen (Physical Vapour Deposition PVD) erfolgen.

Zur Ausbildung der Metallstruktur kann ein Smartmesh auf die Deckschicht oder das Substrat aufgebracht werden und das Smartmesh kann strukturiert werden durch Laserbehandlung vor, während oder nach dem Aufbringen der Deckschicht auf das Substrat. Eine Laserstrukturierung nach Aufbringen einer Deckschicht ist auch möglich, solange die Deckschicht noch genug Laserenergie zur Strukturierung durchlässt.

Grundsätzlich kann nach der Herstellung eine Strukturierung des Metalls, konkret des Smartmeshs mittels Laser erfolgen kann, auch wenn dieses z.B. innenliegend/einkaschiert ist. Eine Demetallisierung mittels Lasers (letztlich ein Wegbrennen /erstören des Metalls an der Stelle) ist auch dann noch möglich.

Unter dem Aspekt der Herstellgeschwindigkeit kann es vorteilhaft sein, die Strukturierung mindestens teilweise mittels Waschfarbe zu bewirken, insbesondre das Unterteilen in die erwähnten Bereiche werden. Gerade dieses kann per Laser je nach Ausgestaltung vergleichsweise lange dauern. Deshalb ist eine Kombination von laserbasierter Demetallisierung mit einer nicht lasergestützen Demetallisierung vorteilhaft.

Mit den vorstehenden Ausführungsformen des Verfahrens zum Herstellen eines Sicherheitsdokuments können die gleichen Abwandlungen, Vorteile und Funktionen realisiert werden, wie mit den vorstehenden Ausführungsformen des Sicherheitselements, insbesondere mit gleichlautenden und/oder analogen Merkmalen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
Fig. 1 schematisch eine Banknote 10 des Stands der Technik, auf deren Sicherheitsstreifen mit einem Eingabemittel eine Relativbewegung ausgeführt wird;
Fig. 2a und 2b schematisch eine Banknote 20 als ein Sicherheitsdokument eines ersten Ausführungsbeispiels im Querschnitt und in Draufsicht;
Fig. 3a und 3b schematisch eine Banknote 30 als ein Sicherheitsdokument eines zweiten Ausführungsbeispiels im Querschnitt und in Draufsicht;
Fig. 4 schematisch eine Banknote 40 als ein Sicherheitsdokument eines dritten Ausführungsbeispiels; und
Fig. 5 schematisch ein Verfahren zur Herstellung des Sicherheitsdokuments des ersten Ausführungsbeispiels.

Im Folgenden werden Ausführungsbeispiele beschrieben, wobei insbesondere die Unterschiede zwischen den Ausführungsbeispielen erläutert werden. Für die Beschreibung von Wertebereichen gilt, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können. Der Begriff "leitfähig" und Abwandlungen davon bedeuten vorliegend "elektrisch leitfähig". Der Begriff "leitend" und Abwandlungen davon bedeuten vorliegend "elektrisch leitend".

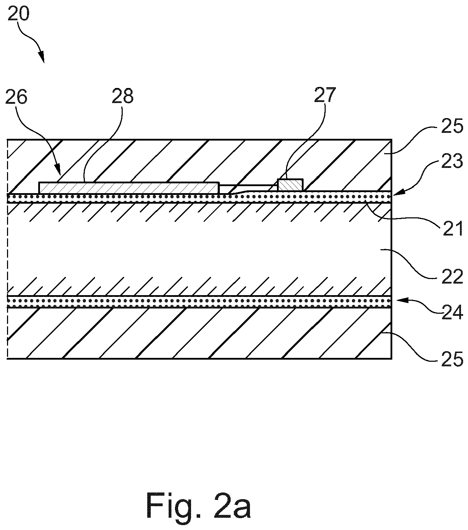

Fig. 2a zeigt schematisch eine Banknote 20 als ein Sicherheitsdokument eines ersten Ausführungsbeispiels im Querschnitt. Die Banknote 20 weist ein flächiges Substrat 22 mit einer Vorderseite 23 und einer Rückseite 24 auf. Die Banknote ist im vorliegenden Beispiel auf der Vorderseite 23 und der Rückseite 24 zumindest teilweise mit einer Deckschicht 25 versehen. Die Deckschicht 25 kann das Substrat auch vollflächig bedecken. Zwischen der Vorderseite des Substrats 22 und der Deckschicht 25 ist mindestens eine flächig verteilte, leitfähige Identifizierungsstruktur 26 vorgesehen, die mittels eines kapazitiven Flächensensors auslesbar ist. Die mindestens eine Identifizierungsstruktur 26 weist mehrere, in einer Reihe angeordnete, kapazitive Kopplungsflächen 27 und mehrere Kondensatorflächen 28 auf. Die kapazitiven Kopplungsflächen 27 sind galvanisch getrennt voneinander jeweils mit einer oder mehreren der Kondensatorflächen 28 leitend verbunden.

Im vorliegenden Beispiel besteht das Substrat 22 einlagig aus Baumwolle und die Deckschicht 25 besteht aus einer Hybrid-Folie für einen Banknoten-Folienverbund und ist aus einem Polymer-Material gebildet, bevorzugt aus PET, PP, PE, LDPE, LLDPE, PA, PC, BOPP, PVC oder natürlichen Biopolymeren. Die Kondensatorflächen 28 bestehen aus Metall und stellen eine Identifizierungscodierung bereit.

Metalle sind vorrangig Kupfer und Aluminium, aber auch Silber, Zink, Chrom, Eisen oder jedes andere Metall/Metalllegierung, welche(s) sich über einen PVD-Bedampfungsprozess abscheiden lässt. Die Metallisierung der erfindungsgemäßen optoelektronischen Vorrichtung kann auf einem einzelnen Metall beruhen. Als Metall eignet sich z. B. Aluminium, Silber, Kupfer, Nickel, Eisen, Chrom, Cobalt, Gold, Titan, Zinn, Zink oder eine Legierung eines oder mehrerer der vorstehend genannten Elemente (z. B. eine Eisen-Silizium-Legierung). Darüber hinaus kann die Metallisierung auf einer mehrschichtigen Metallisierung basieren, die z. B. durch sukzessives Aufdampfen erhältlich ist. Eine vorteilhafte mehrschichtige Metallisierung ist z. B. eine Cr-Schicht, gefolgt von einer Al-Schicht. Die Haftung der Al-Schicht auf dem Schichtaufbau wird durch die Cr-Schicht verbessert.

Die kapazitive Kopplungsflächen 27 bestehen ebenfalls aus Metall und sind leitend mit den jeweils zugeordneten Kondensatorflächen 28 verbunden, wobei die leitenden Verbindungen der Identifizierungsstruktur 26 ebenfalls aus Metall bestehen. Die Kondensatorflächen 28, die kapazitiven Kopplungsflächen 27 und die leitenden Verbindungen, d.h. alle Elemente zur Codierung der kapazitiven Identität der Banknote 20, sind auf der Innenseite der Deckschicht 25 platziert, die auf der Vorderseite 23 des Substrats vorgesehen ist.

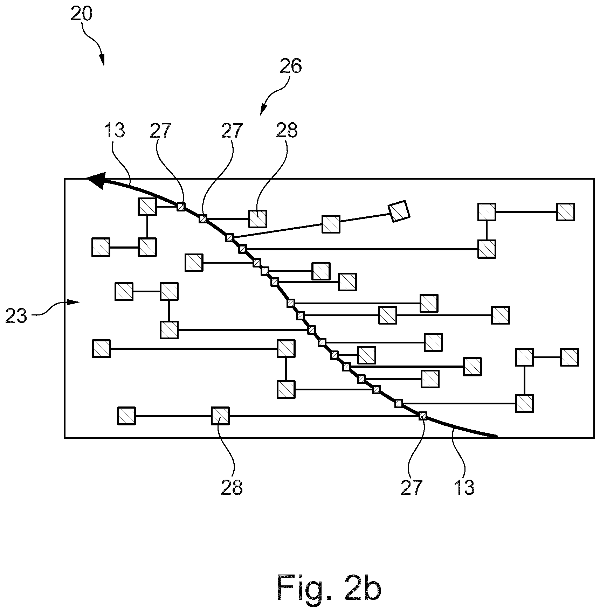

Fig. 2b stellt die Banknote 20 schematisch in Draufsicht ohne Deckschicht 25 dar, so dass die die auf der Vorderseite 23 des Substrats 22 angeordnete Identifizierungsstruktur 26 mit den Kondensatorflächen 28 und den damit elektrisch leitend verbundenen kapazitiven Kopplungsflächen 27 erkennbar ist. Die mindestens eine Identifizierungsstruktur 26 ist als eine flächig strukturierte, im sichtbaren Wellenlängenbereich transparente, leitfähige Metallstruktur ausgebildet. Die Identifizierungsstruktur 26 ist über die Flächenerstreckung der Banknote 20 großflächig verteilt. Dadurch wird eine Datenkapazität von z.B. mindestens 50 bit bereitgestellt. Gleichzeitig werden die Detektionssicherheit, die Unterscheidbarkeit zu anderen Sicherheitsdokumenten und die Fälschungssicherheit gefördert.

Die Banknote 20 ist zur Prüfung auf einem kapazitiven Flächensensor (nicht gezeigt), z.B. einem Tablet-Gerät, mit einem berührungssensitiven Bildschirm, wie ein Touch-Display, geeignet. Um eine Prüfung auf Geräten mit kleinerem berührungssensitiven Bildschirm zu ermöglichen, kann eine entsprechend schmälere Verteilung der Elemente der Identifizierungsstruktur 26 und des Prüfpfades vorgesehen werden. Der Prüfpfad entspricht der Reihe der kapazitiven Kopplungsflächen 27, auf der die Relativbewegung 13 mit einem Eingabemittel wie z.B. einem Finger eines Benutzers ausgeführt wird, um die Identifizierungsstruktur 26 auf dem kapazitiven Flächensensor auszulesen. Die Relativbewegung 13 auf dem Prüfpfad kann durch ein entsprechendes Design-Element (nicht gezeigt), z.B. eine Guilloche, auf der Banknote 20 vorgegeben werden.

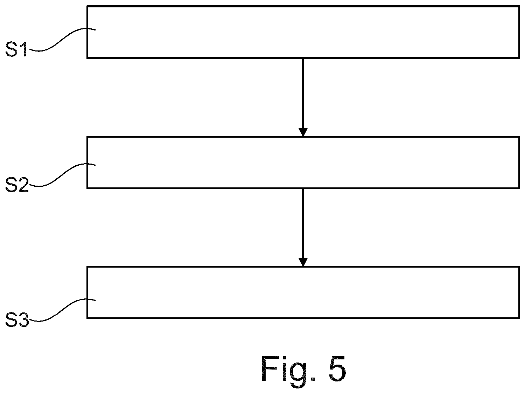

Das Verfahren zur Herstellung des Sicherheitsdokuments 20 ist in Fig. 5 schematisch dargestellt. Zunächst wird in einem ersten Schritt S1 das flächige Substrat 22 mit der Vorderseite 23 und der Rückseite 24 bereitgestellt. Im Schritt S2 wird die mindestens eine flächig verteilte, leitfähige Identifizierungsstruktur 26 vorgesehen, die mittels eines kapazitiven Flächensensors auslesbar ist. Dabei werden mehrere, in einer Reihe angeordnete, kapazitive Kopplungsflächen 27 und mehrere Kondensatorflächen 28 ausgebildet, und die kapazitiven Kopplungsflächen werden galvanisch getrennt voneinander jeweils mit einer oder mehreren Kondensatorflächen leitend verbunden. Im Schritt S3 wird die Deckschicht 25 aufgebracht. Auf diese Weise wird die Banknote 20 als eine Folienverbundbanknote hergestellt.

Zur Ausbildung der Metallstruktur der Identifizierungsstruktur 26 wird im vorliegenden Beispiel ein Smartmesh auf die Deckschicht 25 aufgebracht und das Smartmesh wird strukturiert durch Laserbehandlung vor dem Aufbringen der Deckschicht 25 auf das Substrat 22, um Bereiche zu schaffen, die nicht kapazitiv wirksam sind.

Das Smartmesh der Metallstruktur der Identifizierungsstruktur 26 wird im vorliegenden Beispiel ausgebildet durch Aufbringen eines Risstemplats aus XY auf die Deckschicht 25, Aufbringen einer Metallschicht aus den oben genannten Materialien auf das Risstemplat, Auswaschen des Risstemplats und Strukturieren der Metallschicht mittels Laserbehandlung. Die Metallstruktur des Smartmeshs kann alternativ ausgebildet werden durch Aufbringen einer auswaschbaren Farbschicht auf die Deckschicht 25, Aufbringen des Risstemplats auf der Farbschicht, Aufbringen der Metallschicht auf das Risstemplat, und Auswaschen der Farbschicht und des Risstemplats. Die auswaschbare Farbschicht neben einem auswaschbaren Risstemplat ist in DE 10 2015 007 238 B4 beschrieben, die diesbezüglich vollinhaltlich hier in Bezug genommen wird, insbesondere was mögliche Materialien für die Farbschicht angeht. Wird das Risstemplat oder die auswaschbare Farbschicht auf die Deckschicht 25 aufgebracht, kann die Metallstruktur während der Produktion der Deckschicht erzeugt werden. Das Aufbringen der Metallschicht erfolgt durch Bedampfen mittels Physical Vapour Deposition (PVD). Schließlich wird das Substrat 22 mit der Deckschicht 25, die das Smartmesh der Identifizierungsstruktur 26 aufweist, bedeckt, z.B. durch Kaschieren unter Verwendung eines Klebstoffs 21.

Alternativ kann das Smartmesh auf das Substrat 22 aufgebracht und während oder nach dem Aufbringen der Deckschicht 25 auf das Substrat 22 beispielsweise durch ein Waschverfahren strukturiert werden, wobei das Substrat bevorzugt aus einem Polymermaterial besteht. Dabei kann das strukturierte Smartmesh auf dem Substrat 22 vorgesehen werden, indem das Risstemplat oder die auswaschbare Farbschicht auf das Substrat 22 aufgebracht werden und die restlichen Schritte wie oben erläutert durchgeführt werden. In diesem Fall kann die Deckschicht 25 auf das mit dem Smartmesh der Identifizierungsstruktur 26 versehene Substrat 22 extrudiert oder kaschiert werden.

Durch die Strukturierung des Smartmeshs wie oben erläutert wird die zunächst vollflächig leitende Smartmesh-Schicht in den Gebieten, in denen keine kapazitive Kopplung erwünscht ist, in leitfähige Bereiche von z.B. 1 mm² oder kleiner unterteilt oder vollständig entfernt, um die gewünschte Codierung für den kapazitiven Flächensensor sichtbar zu machen. Dies kann in gekreuzten Unterbrechungslinien, z.B. im Winkel von +/- 45°, in gekreuzten Mäandern oder in jeder anderen Struktur erfolgen, die entsprechend kleine, für den Flächensensor unsichtbare, leitfähige Inseln hinterlässt. Mit Hilfe dieser Unterstrukturierung wird das per se bereits fast nicht erkennbare Smartmesh-Netzwerk vollends unsichtbar und ist selbst mit aufwändigen Analysemethoden schwer zu erkennen. Dieser Umstand eröffnet die Möglichkeit, das strukturiert unterbrochene Smartmesh der Identifizierungsstruktur 26 als Sicherheitsmerkmal für die Banknote 20 zu verwenden.

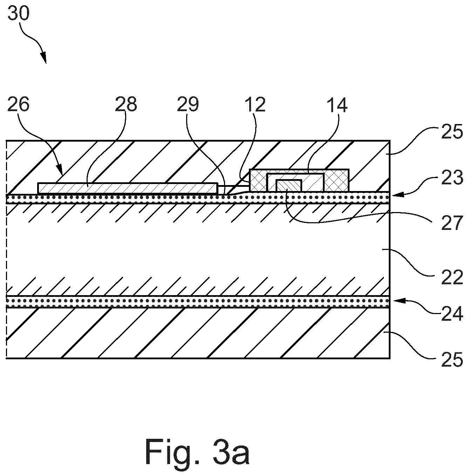

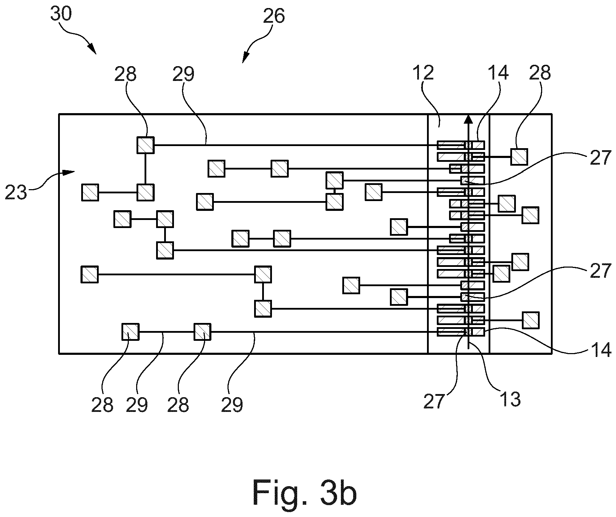

Fig. 3a und 3b zeigen schematisch eine Banknote 30 als ein Sicherheitsdokument eines zweiten Ausführungsbeispiels, im Querschnitt und in Draufsicht. Fig. 3b stellt die Banknote 30 schematisch in Draufsicht ohne Deckschicht 25 dar, so dass die auf der Vorderseite 23 des Substrats 22 angeordnete Identifizierungsstruktur 26 mit den Kondensatorflächen 28 und den damit elektrisch leitend verbundenen kapazitiven Kopplungsflächen 27 erkennbar ist. Die kapazitive Kopplungsflächen 27 sind leitend mit den jeweils zugeordneten Kondensatorflächen 28 verbunden, über Leitungsbahnen 29 der Identifizierungsstruktur 26.

Die Banknote 30 weist im Unterschied zur Banknote 20 zusätzlich voneinander galvanisch getrennte leitfähige Codierungsstrukturen 14 auf, die in elektrischem Kontakt oder in kapazitiver Kopplung zu den Kopplungsflächen 27 der Identifizierungsstruktur 26 angeordnet sind. Die Codierungsstrukturen sind bevorzugt als möglichst mit dem unbewaffneten Auge nicht sichtbare Unterbrechungen oder Demetallisierungen der LEAD-Metallisierung aufgebaut. Ein Sicherheitsstreifen 12, z.B. ein LEAD oder ein Patch, ist über den Codierungsstrukturen 14 und Kopplungsflächen 27 vorgesehen. Diese Kopplungsflächen 27 können z.B. quadratisch, entsprechend der Breite der darüber liegenden Codierungsstrukturen 14, sein, oder ganz deren Form und Positionierung entsprechen. Die flächige Erstreckung der Identifizierungsstruktur 26 ist größer als die Flächenerstreckung des Sicherheitsstreifens 12.

Alternativ kann statt dem Sicherheitsstreifen 12 ein Sicherheitsfaden vorhanden sein, wobei der Sicherheitsfaden und die Codierungsstrukturen 14 z.B. auf der Vorderseite 23 des Substrats 22 angeordnet sein können.

Im vorliegenden Beispiel ist die Identifizierungsstruktur 26 aus mit Fluor dotiertem Zinnoxid FTO gebildet, einer im sichtbaren Wellenlängenbereich transparenten leitfähigen Farbe. Die mindestens eine Identifizierungsstruktur 26 kann alternativ aus einer im sichtbaren Wellenlängenbereich zumindest teilweise intransparenten leitfähigen Farbe gebildet sein, wobei auf der Außenseite der Deckschicht 25 eine opake Farbannahmeschicht aufgebracht wird.

Mit diesem Ausführungsbeispiel kann das von den Codierungsstrukturen 14 in die zusätzlichen Codierungselemente, d.h. die Kondensatorflächen 28, der Identifizierungsstruktur 26 eingekoppelt werden. Durch das Vorsehen der leitfähigen Identifizierungsstruktur 26 zwischen der Deckschicht 25 und dem Substrat 22, d.h. im ersten und zweiten Beispiel auf den Innenseiten einer der Polymerfolien der Hybrid-Banknoten 20 und 30, kommen die empfindlichen Strukturen der Identifizierungsstruktur 26 zwischen dem Baumwoll-Substrat 22 und der Folie 25 zum Liegen und sind so im Wesentlichen vor Umwelteinflüssen geschützt. Ein weiterer Vorteil dieser Anordnung ist, dass eine opake Farbannahmeschicht, die auf die Außenseite der Polymer-Deckschicht 25 aufgebracht wird, sichtbare, gedruckte leitfähige Strukturen weitgehend unsichtbar macht. So können alle gängigen sichtbaren leitfähigen Farben, wie Silberleitpasten, oder auf leitfähigen Polymeren, wie PEDOT:PSS, basierte Farben unter der Farbannahmeschicht versteckt werden.

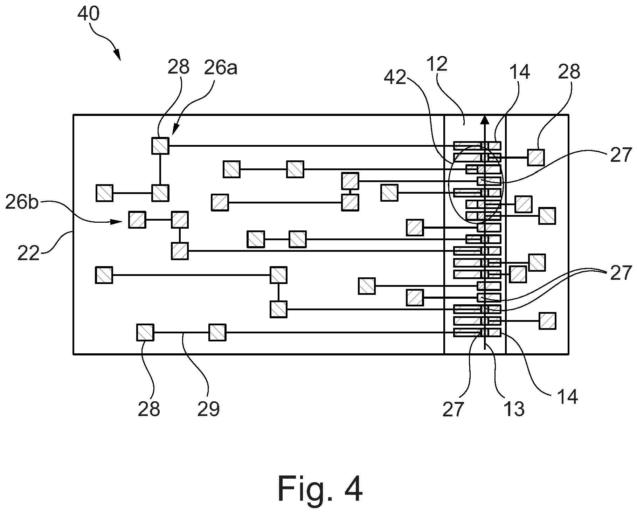

Fig. 4 zeigt schematisch eine Banknote 40 als ein Sicherheitsdokument eines dritten Ausführungsbeispiels in Draufsicht. Im Unterschied zur Banknote 30 der Fig. 3a und 3b ist eine Identifizierungsstruktur 26a zwischen dem Substrat 22 und der Deckschicht 25 auf der Vorderseite 23 des Substrats vorgesehen und eine Identifizierungsstruktur 26b, deren Kondensatorflächen 28 schraffiert dargestellt sind, ist zwischen dem Substrat 22 und der Deckschicht 25 auf der Rückseite 24 des Substrats vorgesehen. Die Banknote 40 ist in Fig. 4 ohne Deckschichten 25 mit durchscheinendem Substrat 22 veranschaulicht, so dass die auf der Vorderseite 23 und der Rückseite 24 des Substrats 22 angeordneten Identifizierungsstrukturen 26a und 26b jeweils mit den Kondensatorflächen 28 und den damit elektrisch leitend verbundenen kapazitiven Kopplungsflächen 27 erkennbar sind.

Bei diesem Ausführungsbeispiel sind die Kondensatorflächen 28 und die Kopplungsflächen 17 der Identifizierungsstrukturen 26a und 26b auf beiden Innenseiten der Hybrid-Folien der Deckschichten 25 vorgesehen, d.h. auf beiden Seiten des Substrats 22. Dies hat den Vorteil, dass noch mehr Fläche für die Verteilung der Codierungselemente, d.h. der Kondensatorflächen 28, und damit eine hohe Datenkapazität zur Verfügung steht. Außerdem kann durch eine unterschiedliche Kopplung der Kondensatorflächen 28 auf der Vorderseite 23 des Substrats und der Kondensatorflächen 28 auf der Rückseite 24 des Substrats an die kapazitive Messfläche, d.h. an das Eingabemittel (z.B. Finger) des Benutzers, die vertikale Lage der Kondensatorflächen 28 über ein unterschiedliches Messsignal differenziert werden. Es können damit auch kreuzende Leitungsbahnen 29 vorgesehen werden. Ferner können an gleicher Position auf unterschiedlichen Seiten des Substrats 22 angeordnete Kondensatorflächen 28 realisiert werden, die wiederum ein anderes kapazitives Messsignal ergeben.

Zusätzlich zu den zahlreichen Variationsmöglichkeiten der kapazitiven Kopplung der einzelnen Kondensatorflächen 28 kann im vorliegenden Beispiel eine galvanische Durchkontaktierung im Bereich eines Banknotenfensters realisiert werden, was weitere Möglichkeiten zur Messsignal-Differenzierung eröffnet. Das Substrat 22 weist zu diesem Zweck eine Öffnung 42 auf, in der die mindestens eine Identifizierungsstruktur 26a der Vorderseite und die mindestens eine Identifizierungsstruktur 26b der Rückseite über einen galvanischen Kontakt miteinander verbunden sind. Die Öffnung 42 ist als ein Fenster im Substrat 22 ausgebildet, d.h. bei der Banknote 40 als ein Banknotenfenster.

Gemäß anderen Ausführungsbeispielen besteht das Substrat 22 aus einem Polymer-Material. Die mindestens eine Identifizierungsstruktur 26 ist auf dem Substrat 22 vorgesehen und auf dem Substrat 22 mit der Identifizierungsstruktur 26 ist eine Farbannahmeschicht als die Deckschicht 25 aufgebracht. Zur Herstellung der Farbannahmeschicht können physikalisch trocknende Dispersionen von gesättigten, unreaktiven Acrylaten verwendet werden.

In einem weiteren Beispiel eines Sicherheitsdokuments besteht das Substrat 22 aus einem Polymer-Material und die Deckschicht 25 besteht aus Baumwolle und/oder Papier. Die mindestens eine Identifizierungsstruktur 26 wird auf das Substrat 22 aufgebracht. In dieser Variante ist die mindestens eine Identifizierungsstruktur 26 durch die Deckschicht 25 aus Baumwolle und/oder Papier geschützt.

Ein Beispiel betrifft eine Plastikkarte, z.B. ein ID-Dokument oder eine Zahlungsverkehr-Karte. Die Plastikkarte besitzt ein Substrat 22 aus einem Polymer-Material und mindestens eine, nicht sichtbare kapazitive Identifizierungsstruktur 26 aus einem Smartmesh. Die Deckschicht 25 aus einem Polymer-Material ist auf der Vorderseite und/oder Rückseite des Substrats vorgesehen. D.h. die Plastikkarte kann mehrere Laminatfolien beinhalten. Mindestens eine der Laminatfolien der Plastikkarte ist mit dem oben beschriebenen, strukturierten Smartmesh mit Codierung ausgestattet. Die Relativbewegung 13 wird im Design der Plastikkarte vorgezeichnet, sodass deren Prüfung entsprechend durchgeführt werden kann.

Mit Hilfe der oben beschriebenen Laser-Strukturierung eines Smartmeshs kann auch beliebigen Sicherheitsdokumenten, z.B. Urkunden, Verträge, Zeugnisse, etc. eine kapazitive, digitale Signatur verliehen werden.

In allen Beispielen und Ausführungsformen kann die mindestens eine Identifizierungsstruktur 26; 26a, 26b selbsterdend ausgebildet sein. In diesem Fall können die kapazitiven Kopplungsflächen nicht in einer Reihe angeordnet sein. Zum Auslesen und Erden der Identifizierungsstruktur wird das Sicherheitsdokument auf den kapazitiven Flächensensor aufgelegt, eine Relativbewegung mit einem Eingabemittel ist nicht erforderlich.

### Bezugszeichenliste

10 : Banknote
12 : Sicherheitsstreifen
13 : Relativbewegung
14 : leitfähige Codierungsstruktur
20 : Sicherheitsdokument, Banknote
22 : Substrat
23 : Vorderseite
24 : Rückseite
25 : Deckschicht
26 : leitfähige Identifizierungsstruktur
27: kapazitive Kopplungsfläche
28 : Kondensatorfläche
29 : Leitungsbahn
30 : Sicherheitsdokument, Banknote
40 : Sicherheitsdokument, Banknote
42 : Öffnung, Fenster, Banknotenfenster
S1 : Verfahrensschritt
S2 : Verfahrensschritt
S3 : Verfahrensschritt

## Patentansprüche

1. Sicherheitsdokument, mit
einem flächigen Substrat (22) mit einer Vorderseite (23) und einer Rückseite (24), das zumindest teilweise mit einer Deckschicht (25) versehen ist,
wobei zwischen dem Substrat und der Deckschicht mindestens eine flächig verteilte, leitfähige Identifizierungsstruktur (26; 26a, 26b) vorgesehen ist, die mittels eines kapazitiven Flächensensors auslesbar ist, wobei die mindestens eine Identifizierungsstruktur (26; 26a, 26b) mehrere kapazitive Kopplungsflächen (27) und mehrere Kondensatorflächen (28) aufweist, und die kapazitiven Kopplungsflächen (27) galvanisch getrennt voneinander jeweils mit einer oder mehreren der Kondensatorflächen (28) leitend verbunden sind;
**dadurch gekennzeichnet, dass**
die mindestens eine Identifizierungsstruktur (26; 26a, 26b) als eine flächig strukturierte Schicht ausgebildet ist, die mindestens ein Element aufweist, ausgewählt aus einer im sichtbaren und/oder IR-Wellenlängenbereich zumindest teilweise transparenten leitfähigen Farbe und einer im sichtbaren und/ oder IR-Wellenlängenbereich zumindest teilweise transparenten, leitfähigen Metallstruktur; und/oder wobei die mindestens eine Identifizierungsstruktur (26; 26a, 26b) als eine flächig strukturierte Schicht ausgebildet ist, die eine im sichtbaren und/oder IR-Wellenlängenbereich zumindest teilweise intransparente leitfähige Farbe aufweist, und wobei auf der Außenseite der Deckschicht eine opake Farbannahmeschicht aufgebracht ist.

2. Sicherheitsdokument nach Anspruch 1,
wobei die leitfähige Farbe mindestens ein Element aufweist, ausgewählt aus Fluor dotiertem Zinnoxid (FTO), Aluminium dotiertem Zinkoxid (AZO), Indiumzinnoxid (ITO), Zinkoxid (ZnO), Isolator-Metall-Isolator-Farbe (IMI), Silber-Nanodrähte, Kohlenstoffnanoröhren (CNT), Graphen und leitfähige Polymere; und/oder
wobei die Metallstruktur als ein strukturiert unterbrochenes Smartmesh ausgebildet ist.

3. Sicherheitsdokument nach einem der vorstehenden Ansprüche, wobei die mindestens eine Identifizierungsstruktur (26; 26a, 26b) voneinander galvanisch getrennte leitfähige Codierungsstrukturen (14) aufweist und die kapazitiven Kopplungsflächen (27) jeweils mit einer der leitfähigen Codierungsstrukturen leitend verbunden und/ oder damit kapazitiv gekoppelt angeordnet sind.

4. Sicherheitsdokument nach einem der vorstehenden Ansprüche,
wobei die kapazitiven Kopplungsflächen (27) in einer Reihe angeordnet sind,
wobei die Kondensatorflächen (28) und/oder die leitfähigen Codierungsstrukturen (14) mindestens eine Identifizierungscodierung aufweisen oder als mindestens eine Identifizierungscodierung ausgebildet sind; und/oder
wobei das Sicherheitsdokument (20; 30; 40) einen Sicherheitsstreifen (12), einen Sicherheitsfaden und/oder eine Guilloche aufweist, unter denen die leitfähigen Codierungsstrukturen (14) und/oder die kapazitiven Kopplungsflächen vorgesehen sind.

5. Sicherheitsdokument nach einem der vorstehenden Ansprüche,
wobei das Substrat (22) ein Papier und/oder eine Baumwolle enthält oder daraus gebildet ist und die Deckschicht (25) mindestens ein Polymer enthält oder daraus gebildet ist; oder
wobei das Substrat (22) mindestens ein Polymer enthält oder daraus gebildet ist und die Deckschicht (25) ein Papier und/oder ein Baumwolle enthält oder daraus gebildet ist; oder
wobei das Substrat (22) und die Deckschicht (25) mindestens ein Polymer oder unterschiedliche Polymere enthalten oder daraus gebildet sind.

6. Sicherheitsdokument nach einem der vorstehenden Ansprüche, wobei die mindestens eine Identifizierungsstruktur (26a, 26b) zwischen dem Substrat (22) und der Deckschicht (25) auf der Vorderseite (23) des Substrats und/oder zwischen dem Substrat und der Deckschicht auf der Rückseite (24) des Substrats vorgesehen ist; und/oder wobei die mindestens eine Identifizierungsstruktur (26; 26a, 26b) auf der Innenseite der Deckschicht (25), auf der Vorderseite (23) des Substrats und/oder auf der Rückseite (24) des Substrats aufgebracht ist.

7. Sicherheitsdokument nach Anspruch 6,
wobei mindestens eine der Identifizierungsstrukturen (26a) zwischen dem Substrat (22) und der Deckschicht (25) auf der Vorderseite des Substrats und mindestens eine der Identifizierungsstrukturen (26b) zwischen dem Substrat (22) und der Deckschicht (25) auf der Rückseite des Substrats vorgesehen sind; und/oder
wobei das Substrat (22) eine Öffnung (42) aufweist, in der mindestens eine Identifizierungsstruktur (26a) der Vorderseite des Substrats und mindestens eine Identifizierungsstruktur (26b) der Rückseite des Substrats über einen galvanischen Kontakt miteinander verbunden sind.

8. Sicherheitsdokument nach einem der vorstehenden Ansprüche,
wobei die mindestens eine Identifizierungsstruktur (26; 26a, 26b) selbsterdend ausgebildet ist und zum Auslesen und Erden durch Auflegen des Sicherheitsdokuments (20; 30; 40) auf den kapazitiven Flächensensor ausgebildet ist; und/oder
wobei die mindestens eine Identifizierungsstruktur (26; 26a, 26b) zum Auslesen und Erden durch Auflegen des Sicherheitsdokuments (20; 30; 40) auf den kapazitiven Flächensensor, der berührungssensitiv ist, und durch eine Bewegung eines Eingabemittels in Kontakt mit dem und über das Sicherheitsdokument im Bereich der kapazitiven Kopplungsflächen (27) ausgebildet ist.

9. Sicherheitsdokument nach einem der vorstehenden Ansprüche,
wobei die mindestens eine Identifizierungsstruktur (26; 26a, 26b) eine Datenkapazität von 10 bis 100 bit besitzt; und/oder
wobei die mindestens eine Identifizierungsstruktur (26; 26a, 26b) über mindestens 30%, bevorzugt mindestens 50%, mehr bevorzugt mindestens 80% der flächigen Erstreckung des Substrats (22) verteilt ist;
und/ oder
wobei das Sicherheitsdokument (20; 30; 40) eine Banknote, ein Scheck, ein Wertpapier, ein Ausweis, ein Pass, eine Eintrittskarte, eine Fahrkarte, eine Flugkarte, ein Etikett, eine Briefmarke, eine Zahlungsverkehr-Karte, eine Urkunde, ein Vertrag oder ein Zeugnis ist.

10. Verfahren zum Herstellen eines Sicherheitsdokuments nach einem der vorstehenden Ansprüche, mit
Bereitstellen eines flächigen Substrats (22) mit einer Vorderseite (23) und einer Rückseite (23) (S1), und
Aufbringen einer Deckschicht (25) zumindest teilweise auf das Substrat (22) (S3),
wobei zwischen dem Substrat und der Deckschicht mindestens eine flächig verteilte, leitfähige Identifizierungsstruktur (26; 26a, 26b) vorgesehen wird (S2), die mittels eines kapazitiven Flächensensors auslesbar ist,
wobei in der mindestens einen Identifizierungsstruktur (26; 26a, 26b) mehrere kapazitive Kopplungsflächen (27) und mehrere Kondensatorflächen (28) vorgesehen werden, und die kapazitiven Kopplungsflächen galvanisch getrennt voneinander jeweils mit einer oder mehreren der Kondensatorflächen leitend verbunden werden;
**dadurch gekennzeichnet, dass**
die mindestens eine Identifizierungsstruktur (26; 26a, 26b) als eine flächig strukturierte Schicht ausgebildet wird, die mindestens ein Element aufweist, ausgewählt aus einer im sichtbaren Wellenlängenbereich transparenten leitfähigen Farbe und einer im sichtbaren Wellenlängenbereich transparenten, leitfähigen Metallstruktur; und/oder wobei die mindestens eine Identifizierungsstruktur (26; 26a, 26b) als eine flächig strukturierte Schicht ausgebildet wird, die eine im sichtbaren Wellenlängenbereich zumindest teilweise intransparente leitfähige Farbe aufweist, und wobei auf der Außenseite der Deckschicht eine opake Farbannahmeschicht aufgebracht wird.

11. Verfahren nach Anspruch 10,
wobei die mindestens eine Identifizierungsstruktur (26; 26a, 26b) auf eine Innenseite der Deckschicht aufgebracht wird und die Deckschicht mit der Innenseite auf die Vorderseite und/oder die Rückseite des Substrats aufgebracht wird; oder
wobei die mindestens eine Identifizierungsstruktur (26; 26a, 26b) auf die Vorderseite und/oder die Rückseite des Substrats aufgebracht wird und die Deckschicht auf die mit der mindestens einen Identifizierungsstruktur (26; 26a, 26b) versehenen Seite des Substrats aufgebracht wird.

12. Verfahren nach Anspruch 10 oder 11,
wobei die leitfähige Farbe mindestens ein Element aufweist, ausgewählt aus Fluor dotiertem Zinnoxid (FTO), Aluminium dotiertem Zinkoxid (AZO), Indiumzinnoxid (ITO), Zinkoxid (ZnO), Isolator-Metall-Isolator-Farbe (IMI), Silber-Nanodrähte, Kohlenstoffnanoröhren (CNT), Graphen und leitfähige Polymere; und/oder
wobei zur Ausbildung der Metallstruktur ein flächig erstrecktes Smartmesh ausgebildet wird und das Smartmesh, in nicht zur Identifikation benötigen Teilflächen, in Bereiche von kleiner als 1 mm² unterteilt wird.

13. Verfahren nach einem der Ansprüche 10 bis 12,
wobei die Metallstruktur ausgebildet wird durch Aufbringen eines Risstemplats auf die Deckschicht (25) oder das Substrat (22), Aufbringen einer Metallschicht auf das Risstemplat, Auswaschen des Risstemplats und Strukturieren der Metallschicht mittels Laserbehandlung; und/oder
wobei die Metallstruktur ausgebildet wird durch Aufbringen einer auswaschbaren Farbschicht auf die Deckschicht (25) oder das Substrat (22), Aufbringen eines Risstemplats auf der Farbschicht, Aufbringen einer Metallschicht auf das Risstemplat, und Auswaschen der Farbschicht und des Risstemplats; und/oder
wobei zur Ausbildung der Metallstruktur ein Smartmesh auf die Deckschicht (25) oder das Substrat (22) aufgebracht wird und das Smartmesh strukturiert wird während oder nach dem Aufbringen der Deckschicht auf das Substrat, wobei bevorzugt eine laserbasierte Demetallisierung eingesetzt wird.

## Claims

1. Security document, comprising
an extensive substrate (22) having a facing side (23) and a reverse side (24) and being provided at least partially with an outer layer (25),
wherein there is, between the substrate and the outer layer, at least one extensively distributed, conductive identification structure (26; 26a, 26b) which can be read by means of a capacitive surface sensor, the at least one identification structure (26; 26a, 26b) having multiple capacitive coupling areas (27) and multiple capacitor areas (28), and the capacitive coupling areas (27) in galvanic isolation from one another being each in conducting communication with one or more of the capacitor areas (28);
**characterized in that**
the at least one identification structure (26; 26a, 26b) is embodied as an extensively structured layer which has at least one element selected from a conductive ink which is at least partially transparent in the visible and/or IR wavelength range and a conductive metal structure which is at least partially transparent in the visible and/or IR wavelength range; and/or
wherein the at least one identification structure (26; 26a, 26b) is embodied as an extensively structured layer which has a conductive ink which is at least partially untransparent in the visible and/or IR wavelength range, and wherein the outside of the outer layer bears an applied opaque ink acceptance layer.

2. Security document according to Claim 1,
wherein the conductive ink has at least one element selected from fluorine-doped tin oxide (FTO), aluminium-doped zinc oxide (AZO), indium tin oxide (ITO), zinc oxide (ZnO), insulator-metal-insulator ink (IMI), silver nanowires, carbon nanotubes (CMT), graphene and conductive polymers; and/or
wherein the metal structure is embodied as a smart mesh with structured interruptions.

3. Security document according to either of the preceding claims,
wherein the at least one identification structure (26; 26a, 26b) has conductive coding structures (14) galvanically isolated from one another and the capacitive coupling areas (27) are each in conducting communication with one of the conductive coding structures and/or are arranged in capacitive coupling therewith.

4. Security document according to any of the preceding claims,
wherein the capacitive coupling areas (27) are arranged in a row,
wherein the capacitor areas (28) and/or the conductive coding structures (14) have at least one identification coding or are embodied as at least one identification coding; and/or
wherein the security document (20; 30; 40) has a security strip (12), a security thread and/or a guilloche, under which the conductive coding structures (14) and/or the capacitive coupling areas are provided.

5. Security document according to any of the preceding claims,
wherein the substrate (22) contains or is formed of a paper and/or a cotton and the outer layer (25) contains or is formed of at least one polymer; or
wherein the substrate (22) contains or is formed of at least one polymer and the outer layer (25) contains or is formed of a paper and/or a cotton; or
wherein the substrate (22) and the outer layer (25) contain or are formed of at least one polymer or different polymers.

6. Security document according to any of the preceding claims,
wherein the at least one identification structure (26a, 26b) is provided between the substrate (22) and the outer layer (25) on the facing side (23) of the substrate and/or between the substrate and the outer layer on the reverse side (24) of the substrate; and/or
wherein the at least one identification structure (26; 26a, 26b) is applied on the inside of the outer layer (25), on the facing side (23) of the substrate and/or on the reverse side (24) of the substrate.

7. Security document according to Claim 6,
wherein at least one of the identification structures (26 a) is provided between the substrate (22) and the outer layer (25) on the facing side of the substrate, and at least one of the identification structures (26b) is provided between the substrate (22) and the outer layer (25) on the reverse side of the substrate; and/or
wherein the substrate (22) has an opening (42) in which at least one identification structure (26a) of the facing side of the substrate and at least one identification structure (26b) of the reverse side of the substrate are in communication with one another by way of a galvanic contact.

8. Security document according to any of the preceding claims,
wherein the at least one identification structure (26; 26a, 26b) is embodied to be self-earthing and is embodied for readout and earthing by placement of the security document (20; 30; 40) onto the capacitive surface sensor; and/or
wherein the at least one identification structure (26; 26a, 26b) is embodied for readout and earthing by placement of the security document (20; 30; 40) onto the capacitive surface sensor, which is touch-sensitive, and by movement of an input means in contact with and over the security document in the region of the capacitive coupling areas (27).

9. Security document according to any of the preceding claims,
wherein the at least one identification structure (26; 26a, 26b) possesses a data capacity of 10 to 100 bits; and/or
wherein the at least one identification structure (26; 26a, 26b) is distributed over at least 30%, preferably at least 50%, more preferably at least 80% of the extent of the substrate (22);
and/or
wherein the security document (20; 30; 40) is a banknote, a cheque, a financial security, an identification document, a passport, an entry ticket, a travel ticket, a flight ticket, a label, a postage stamp, a payment card, a deed, a contract or a certificate.

10. Method for producing a security document according to any of the preceding claims, comprising
providing an extensive substrate (22) having a facing side (23) and a reverse side (23) (S1), and applying an outer layer (25) at least partially to the substrate (22) (S3),
wherein there is provided (S2), between the substrate and the outer layer, at least one extensively distributed, conductive identification structure (26; 26a, 26b) which can be read by means of a capacitive surface sensor,
wherein multiple capacitive coupling areas (27) and multiple capacitor areas (28) are provided in the at least one identification structure (26; 26a, 26b), and the capacitive coupling areas (27) in galvanic isolation from one another are each in conducting communication with one or more of the capacitor areas;
**characterized in that**
the at least one identification structure (26; 26a, 26b) is embodied as an extensively structured layer which has at least one element selected from a conductive ink which is transparent in the visible wavelength range and a conductive metal structure which is transparent in the visible wavelength range; and/or
wherein the at least one identification structure (26; 26a, 26b) is embodied as an extensively structured layer which has a conductive ink which is at least partially untransparent in the visible wavelength range, and wherein an opaque ink acceptance layer is applied on the outside of the outer layer.

11. Method according to Claim 10,
wherein the at least one identification structure (26; 26a, 26b) is applied to an inside of the outer layer and the outer layer is applied with the inside to the facing side and/or the reverse side of the substrate; or
wherein the at least one identification structure (26; 26a, 26b) is applied to the facing side and/or the reverse side of the substrate and the outer layer is applied to that side of the substrate provided with the at least one identification structure (26; 26a, 26b).

12. Method according to Claim 10 or 11,
wherein the conductive ink has at least one element selected from fluorine-doped tin oxide (FTO), aluminium-doped zinc oxide (AZO), indium tin oxide (ITO), zinc oxide (ZnO), insulator-metal-insulator ink (IMI), silver nanowires, carbon nanotubes (CMT), graphene and conductive polymers; and/or
wherein to form the metal structure, an extensive smart mesh is formed and the smart mesh, in sub-areas not needed for identification, is subdivided into regions of smaller than 1 mm².

13. Method according to any of Claims 10 to 12,
wherein the metal structure is formed by applying a crack template to the outer layer (25) or the substrate (22), applying a metal layer to the crack template, removing the crack template by washing, and structuring the metal layer by means of laser treatment; and/or
wherein the metal structure is formed by applying a wash-removable ink layer to the outer layer (25) or the substrate (22), applying a crack template on the ink layer, applying a metal layer to the crack template, and removing the ink layer and the crack template by washing; and/or
wherein to form the metal structure, a smart mesh is applied to the outer layer (25) or the substrate (22) and the smart mesh is structured during or after the application of the outer layer to the substrate, where preferably a laser-based demetallization is employed.

## Revendications

1. Document de sécurité, comportant un substrat plat (22) ayant un recto (23) et un verso (24), qui est au moins partiellement pourvu d'une couche de couverture (25),
dans lequel entre le substrat et la couche de couverture est prévue au moins une structure d'identification conductrice (26 ; 26a, 26b) répartie en surface, qui peut être lue à l'aide d'un capteur de surface capacitif, l'au moins une structure d'identification (26 ; 26a, 26b) comportant plusieurs surfaces de couplage capacitif (27) et plusieurs surfaces de condensateur (28), et les surfaces de couplage capacitif (27), galvaniquement isolées les unes des autres, étant reliées par liaison conductrice, chacune à une ou plusieurs des surfaces de condensateur (28),
**caractérisé en ce qu'**une structure d'identification (26 ; 26a, 26b) est réalisée sous forme d'une couche structurée en surface, qui comprend au moins un élément choisi parmi une encre conductrice, au moins partiellement transparente dans le domaine des longueurs d'onde visibles et/ou IR, et une structure métallique conductrice au moins partiellement transparente dans la plage de longueurs d'onde visibles et/ou IR ; et/ou l'au moins une structure d'identification (26 ; 26a, 26b) étant réalisée sous forme d'une couche structurée en surface, qui comprend une encre conductrice au moins partiellement non transparente dans la plage de longueurs d'onde visibles et/ou IR, et une couche réceptrice d'encre étant appliquée sur la face extérieure de la couche de couverture.

2. Document de sécurité selon la revendication 1, dans lequel l'encre conductrice comprend au moins un élément choisi parmi l'oxyde d'étain dopé au fluor (FTO), l'oxyde de zinc dopé à l'aluminium (AZO), l'oxyde d'indium et d'étain (ITO), l'oxyde de zinc (ZnO), une encre isolant-métal-isolant (IMI), les nanofils d'argent, les nanotubes de carbone (CNT), le graphène et les polymères conducteurs ; et/ou dans lequel la structure métallique est réalisée sous forme d'une Smartmesh à interruption structurée.

3. Document de sécurité selon l'une des revendications précédentes, dans lequel l'au moins une structure d'identification (26 ; 26a, 26b) comprend des structures de codage conductrices (14), galvaniquement isolées les unes des autres, et chacune des surfaces de couplage capacitif (27) est reliée par liaison conductrice à l'une des structures de codage conductrices et/ou est disposée en étant couplée par couplage capacitif à ces dernières.

4. Document de sécurité selon l'une des revendications précédentes, dans lequel les surfaces de couplage capacitif (27) sont montées en série, les surfaces de condensateur (28) et les structures de codage conductrices (14) comportant au moins un codage d'identification ou étant réalisées sous la forme d'au moins un codage d'identification ; et/ou
le document de sécurité (20 ; 30 ; 40) comporte une fente de sécurité (12), un fil de sécurité et/ou un guillochis, en dessous desquels sont prévues les structures de codage conductrices (14) et/ou les surfaces de couplage capacitif.

5. Document de sécurité selon l'une des revendications précédentes, dans lequel le substrat (22) contient un papier et/ou un coton ou en est constitué, et la couche de couverture (25) contient au moins un polymère ou en est constituée ; ou
dans lequel le substrat (22) contient au moins un polymère ou en est constitué et la couche de couverture (25) contient un papier et/ou un coton ou en est constituée ; ou
dans lequel le substrat (22) et la couche de couverture (25) contiennent au moins un polymère ou différents polymères ou en sont constitués.

6. Document de sécurité selon l'une des revendications précédentes, dans lequel l'au moins une structure d'identification (26a, 26b) est prévue entre le substrat (22) et la couche de couverture (25) sur le recto (23) du substrat et/ou entre le substrat et la couche de couverture sur le verso (24) du substrat ; et/ou dans lequel l'au moins une structure d'identification (26 ; 26a, 26b) est appliquée sur la face intérieure de la couche de couverture (25), sur le recto (23) du substrat et/ou sur le verso (24) du substrat.

7. Document de sécurité selon la revendication 6, dans lequel au moins l'une des structures d'identification (26a) est prévue entre le substrat (22) et la couche de couverture (25) sur le recto du substrat et au moins l'une des structures d'identification (26b) est prévue entre le substrat (22) et la couche de couverture (25) sur le verso du substrat ; et/ou
dans lequel le substrat (22) comprend une ouverture (42), dans laquelle au moins une structure d'identification (26a) du recto du substrat et au moins une structure d'identification (26b) du verso du substrat sont reliées l'une à l'autre par un contact galvanique.

8. Document de sécurité selon l'une des revendications précédentes, dans lequel l'au moins une structure d'identification (26 ; 26a, 26b) est réalisée avec mise à la terre automatique et est réalisée pour la lecture et la mise à la terre par application du document de sécurité (20 ; 30 ; 40) sur le capteur de surface capacitif, qui est sensible au contact et est réalisée par un déplacement d'un moyen d'entrée en contact avec et par-dessus le document de sécurité dans la zone des surfaces de couplage capacitif (27).

9. Document de sécurité selon l'une des revendications précédentes, dans lequel l'au moins une structure d'identification (26 ; 26a, 26b) possède une capacité de données de 10 à 100 bits ; et/ou dans lequel l'au moins une structure d'identification (26 ; 26a, 26b) est répartie sur au moins 30 %, de préférence au moins 50 %, plus préférentiellement d'au moins 80 % de l'étendue en surface du substrat (22) ; et/ou
dans lequel le document de sécurité (20 ; 30 ; 40) est un billet de banque, un chèque, un papier de valeur, une carte d'identité, un passeport, une carte d'entrée, une carte de transport, un billet d'avion, une étiquette, un timbre, une carte de paiement, un document officiel, un contrat ou un certificat.

10. Procédé de fabrication d'un document de sécurité selon l'une des revendications précédentes, comprenant
la fourniture d'un substrat plan (22) ayant un recto (23) et un verso (23) (S1) et
l'application d'une couche de couverture (25) au moins partiellement sur le substrat (22) (S3),
dans lequel entre le substrat et la couche de couverture est prévue au moins une structure d'identification conductrice (26 ; 26a, 26b) répartie en surface, (S2), qui peut être lue à l'aide d'un capteur de surface capacitif,
dans lequel, dans l'au moins une structure d'identification (26 ; 26a, 26b), plusieurs surfaces de couplage capacitif (27) et plusieurs surfaces de condensateur (28) sont prévues, et les surfaces de couplage capacitif, galvaniquement isolées les unes des autres, étant chacune reliées par liaison conductrice à une ou plusieurs des surfaces de condensateur ;
**caractérisé en ce que** la structure d'identification (26 ; 26a, 26b) est réalisée sous forme d'une couche structurée en surface, qui comprend au moins un élément choisi parmi une encre conductrice transparente dans la plage de longueurs d'onde visibles et une structure métallique conductrice transparente dans la plage de longueurs d'onde visibles ; et/ou l'au moins une structure d'identification (26 ; 26a, 26b) étant réalisée sous la forme d'une couche structurée en surface, qui comprend une encre conductrice partiellement non transparente dans la plage de longueurs d'onde visibles, une couche opaque réceptrice d'encre étant appliquée sur la face extérieure de la couche de couverture.

11. Procédé selon la revendication 10, dans lequel l'au moins une structure d'identification (26 ; 26a, 26b) est appliquée sur la face intérieure de la couche de couverture, et la couche de couverture est, par sa face intérieure, appliquée sur le recto et/ou sur le verso du substrat ; ou
dans lequel l'au moins une structure d'identification (26 ; 26a, 26b) est appliquée sur le recto et/ou sur le verso du substrat, et la couche de couverture est appliquée sur la face du substrat pourvue de l'au moins une structure d'identification (26 ; 26a, 26b).

12. Procédé selon la revendication 10 ou 11, dans lequel l'encre conductrice comprend au moins un élément choisi parmi l'oxyde d'étain dopé au fluor (FTO), l'oxyde de zinc dopé à l'aluminium (AZO), l'oxyde d'indium et d'étain (ITO), l'oxyde de zinc (ZnO), une encre isolant-métal-isolant (IMI), les nanofils d'argent, les nanotubes de carbone (CNT), le graphène et les polymères conducteurs ; et/ou
dans lequel, pour réaliser la structure métallique, une Smartmesh étendue en surface est réalisée, et la Smartmesh est, dans des surfaces partielles qui ne sont pas nécessaires à l'identification, subdivisée en domaines inférieurs à 1 mm².

13. Procédé selon l'une des revendications 10 à 12,
dans lequel la structure métallique est réalisée par application d'un modèle de fissures sur la couche de couverture (25) ou le substrat (22), application d'une couche métallique sur le modèle de fissures, élimination par lavage du modèle de fissures et structuration de la couche métallique par traitement laser ; et/ou
dans lequel la structure métallique est réalisée par application d'une couche d'encre éliminable par lavage sur la couche de couverture (25) ou le substrat (22), application d'un modèle de fissures sur la couche d'encre, application d'une couche métallique sur le modèle de fissures et élimination par lavage de la couche d'encre et du modèle de fissures ; et/ou
dans lequel, pour réaliser la structure métallique, on applique une Smartmesh sur la couche de couverture (25) ou le substrat (22), et la Smartmesh est structurée pendant ou après l'application de la couche de couverture sur le substrat, par utilisation de préférence d'une démétallisation laser.
